# EUROPEAN PATENT APPLICATION

(11) **EP 2 800 343 A1**
(43) Date of publication of application: **05.11.2014**
(21) Application number: 13758529.5
(22) Date of filing: 06.03.2013
(51) Int. Cl.: H04L 29/12

(54) **MESSAGE PROCESSING METHOD, DEVICE AND SYSTEM**

(30) Priority: 07.03.2012 CN 201210058052
(71) Applicant: Huawei Device Co., Ltd., Shenzhen, Guangdong 518129 (CN)
(72) Inventor: BAI, Chunrong, Shenzhen Guangdong 518129 (CN)
(74) Representative: Pfenning, Meinig & Partner GbR
(86) International application number: PCT/CN2013/072208
(87) International publication number: WO 2013/131472

(57) **Abstract**

Embodiments of the present invention provide a message processing method, apparatus, and system. The method includes: receiving a first domain name resolution request message sent by a host computer, where the first domain name resolution request message carries a domain name to be resolved as required by the host computer; determining a first DNS server from a domain name system DNS server priority list according to the first domain name resolution request message, where the first DNS server belongs to a set of DNS servers with a highest priority in the DNS server priority list; and sending a second domain name resolution request message to the first DNS server according to the first domain name resolution request message, where the second domain name resolution request message carries the domain name to be resolved as required by the host computer. According to the message processing method, apparatus, and system in the embodiments of the present invention, a DNS server is selected from a set of DNS servers with a highest priority in a DNS server priority list, which can reduce a domain name resolution time and avoid a domain name resolution failure.

## Description

### TECHNICAL FIELD

The present invention relates to the communications field, and more specifically, to a message processing method, apparatus, and system.

### BACKGROUND

Currently, when a user browses websites on the Internet by using a terminal, most websites are presented to the user in a form of a domain name rather than a form of an Internet Protocol (Internet Protocol, "IP" for short) address. When these websites are being browsed, an Internet access terminal first needs to send a domain name resolution request message to a domain name system (Domain Name System, "DNS" for short) server according to a website the user wants to access, so as to obtain an IP address corresponding to the domain name; and then accesses a website corresponding to the IP address according to the IP address, and establishes a Transmission Control Protocol (Transmission Control Protocol, "TCP" for short) link with the corresponding website to transfer a Hyper text Transfer Protocol (Hyper Text Transfer Protocol, "HTTP" for short) packet and the like. For example, in a Wideband Code Division Multiple Access (Wideband Code Division Multiple Access, "WCDMA" for short) network standard, when a network connection is established between an Internet access terminal and a network side, the network side generally designates two corresponding DNS servers, a primary DNS (Primary DNS) and a secondary DNS (Secondary DNS), for the terminal according to a location where the terminal is located or a home location of the terminal. When needing to access a network and open a web page, the Internet access terminal first sends a domain name resolution request message to the primary DNS server, and if the primary DNS server does not respond, the Internet access terminal sends the domain name resolution request message to the secondary DNS server.

However, the Internet access terminal can send the domain name resolution request message only to the DNS server designated by the network side, and it may take a relatively long time for the Internet access terminal to receive a domain name resolution response message returned by the designated DNS server, which causes that the web page is opened slowly; and if the DNS server designated by the network side becomes invalid, the user cannot browse the web page normally.

### SUMMARY

Embodiments of the present invention provide a message processing method, apparatus, and system, which can solve a problem that an Internet access terminal can send a domain name resolution request message only to a DNS server designated by a network side.

According to one aspect, a message processing method is provided, where the method includes: receiving, by a message processing apparatus, a first domain name resolution request message sent by a host computer, where the first domain name resolution request message carries a domain name to be resolved as required by the host computer; determining, by the message processing apparatus, a first DNS server from a domain name system DNS server priority list according to the first domain name resolution request message, where the first DNS server belongs to a set of DNS servers with a highest priority in the DNS server priority list; and sending, by the message processing apparatus, a second domain name resolution request message to the first DNS server according to the first domain name resolution request message, where the second domain name resolution request message carries the domain name to be resolved as required by the host computer.

According to another aspect, a message processing apparatus is provided, where the apparatus includes: a receiver, configured to receive a first domain name resolution request message sent by a host computer, where the first domain name resolution request message carries a domain name to be resolved as required by the host computer; a memory, configured to store a DNS server priority list; a processor, configured to acquire, according to the first domain name resolution request message received by the receiver, the DNS server priority list stored in the memory and determine a first DNS server from the DNS server priority list, where the first DNS server belongs to a set of DNS servers with a highest priority in the DNS server priority list, and further configured to generate a second domain name resolution request message according to the first domain name resolution request message and the first DNS server, where the second domain name resolution request message carries the domain name to be resolved as required by the host computer; and a sender, configured to send the second domain name resolution request message generated by the processor to the first DNS server.

According to still another aspect, a message processing system is provided, where the system includes: a host computer and a message processing apparatus, where the host computer is configured to send a first domain name resolution request message to the message processing apparatus, where the first domain name resolution request message carries a domain name to be resolved as required by the host computer; and the message processing apparatus is configured to receive the first domain name resolution request message sent by the host computer, determine a first DNS server from a DNS server priority list according to the first domain name resolution request message, where the first DNS server belongs to a set of DNS servers with a highest priority in the DNS server priority list, and send a second domain name resolution request message to the first DNS server according to the first domain name resolution request message, where the second domain name resolution request message carries the domain name to be resolved as required by the host computer.

Based on the foregoing technical solutions and according to the message processing method, apparatus, and system in the embodiments of the present invention, a DNS server is determined from a set of DNS servers with a highest priority in a DNS server priority list, so that a DNS server can be flexibly selected to resolve a domain name, which avoids that only a DNS server designated by a network side can be used to resolve the domain name, thereby further reducing a domain name resolution time, avoiding a domain name resolution failure, and improving user experience of Internet surfing.

### BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 shows a schematic flowchart of a message processing method according to an embodiment of the present invention;
FIG. 2 shows a schematic flowchart of a message processing method according to another embodiment of the present invention;
FIG. 3 shows a schematic flowchart of a message processing method according to another embodiment of the present invention;
FIG. 4 shows a schematic flowchart of a message processing method according to another embodiment of the present invention;
FIG. 5 shows a schematic structural diagram of a message processing apparatus according to an embodiment of the present invention; and
FIG. 6 shows a schematic structural diagram of a message processing system according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

It should be understood that, the technical solutions of the embodiments of the present invention may be applied to various communications systems, such as: a Global System for Mobile Communications (Global System of Mobile communication, "GSM" for short) system, a Code Division Multiple Access (Code Division Multiple Access, "CDMA" for short) system, a Wideband Code Division Multiple Access (Wideband Code Division Multiple Access, "WCDMA" for short) system, a general packet radio service (General Packet Radio Service, "GPRS" for short), a Long Term Evolution (Long Term Evolution, "LTE" for short) system, an LTE frequency division duplex (Frequency Division Duplex, "FDD" for short) system, an LTE time division duplex (Time Division Duplex, "TDD" for short), and a Universal Mobile Telecommunications System (Universal Mobile Telecommunication System, "UMTS" for short).

A host computer, also called a terminal, an Internet access terminal, a user, a user equipment, and the like, may communicate with one or more core networks through an access network. The host computer may be a mobile terminal such as a mobile phone (or called a "cellular" phone) and a computer with a mobile terminal, for example, a portable, pocket-sized, handheld, computer-built-in, or vehicle-mounted mobile apparatus, which exchange languages and/or data with the access network.

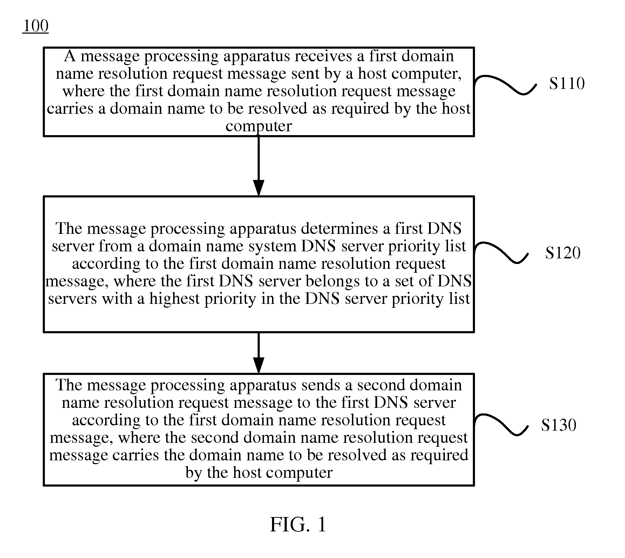

FIG. 1 is a schematic flowchart of a message processing method 100 according to an embodiment of the present invention. As shown in FIG. 1, the method 100 includes:

S110. A message processing apparatus receives a first domain name resolution request message sent by a host computer, where the first domain name resolution request message carries a domain name to be resolved as required by the host computer.

S120. The message processing apparatus determines a first DNS server from a domain name system DNS server priority list according to the first domain name resolution request message, where the first DNS server belongs to a set of DNS servers with a highest priority in the DNS server priority list.

S130. The message processing apparatus sends a second domain name resolution request message to the first DNS server according to the first domain name resolution request message, where the second domain name resolution request message carries the domain name to be resolved as required by the host computer.

When receiving the first domain name resolution request message sent by the host computer, the message processing apparatus may select a DNS server from the set of DNS servers with the highest priority in the DNS server priority list and send the second domain name resolution request message to the selected DNS server.

Therefore, according to the message processing method in this embodiment of the present invention, a DNS server is determined from a set of DNS servers with a highest priority in a DNS server priority list, so that a DNS server can be flexibly selected to resolve a domain name, which avoids that only a DNS server designated by a network side can be used to resolve the domain name, thereby further reducing a domain name resolution time, avoiding a domain name resolution failure, and improving user experience of Internet surfing.

It should be understood that in this embodiment of the present invention, the set of DNS servers with the highest priority may include one or more DNS servers. For example, the set of DNS servers with the highest priority may be formed by a DNS server with a priority higher than a priority of the DNS server designated by the network side for the host computer, may be formed by a DNS server with a priority higher than a certain threshold, or may include only a DNS server with a highest priority in the DNS server priority list, which should depend on a specific situation and is not limited in this embodiment of the present invention.

In this embodiment of the present invention, the DNS server priority list may be configured statically. For example, in a DNS server priority list in which a DNS server is ranked according to quality of hardware configuration of the DNS server, a DNS server with a higher priority is a DNS server with a better hardware configuration. The DNS server priority list may also be determined based on an average resolution time of resolving domain names by a DNS server. For example, a DNS server with a shorter average resolution time of resolving domain names may be determined as a DNS server with a higher priority. The DNS server priority list may be determined according to a specific situation, which is not limited in this embodiment of the present invention.

In this embodiment of the present invention, after receiving the first domain name resolution request message sent by the host computer, the message processing apparatus may determine, according to an original target DNS server (that is, the DNS server designated by the network side for the host computer) in the first domain name resolution request message, whether the original target DNS server belongs to the set of DNS servers with the highest priority. If the original target DNS server belongs to the set of DNS servers with the highest DNS server priority, the message processing apparatus may directly send a second domain name request message that has a target DNS server same as that in the first domain name resolution request message; if the original target DNS server does not belong to the set of DNS servers with the highest DNS server priority, the message processing apparatus may select a DNS server from the set of DNS servers with the highest priority and send a second domain name resolution request message to the newly-selected DNS server.

In this embodiment of the present invention, in S120, before the message processing apparatus determines the first DNS server from a DNS server list according to the first domain name resolution request, the method 100 may further include:
determining the DNS server priority list based on an average resolution time of resolving domain names by a DNS server.

In this embodiment of the present invention, the DNS server priority list may be determined based on the average resolution time of resolving domain names by the DNS server, where the resolution time may include a total time consumed by the DNS server in a process of receiving a domain name resolution request message, performing domain name resolution, and returning a domain name resolution response message. For example, a DNS server with a shorter average resolution time of resolving domain names is determined as a DNS server with a higher priority. In this embodiment of the present invention, the DNS server priority list may also be determined according to the average resolution time and resolution times of resolving domain names by the DNS server. For example, for two DNS servers with a same average resolution time, because a DNS server with more resolution times is steadier in performance, the DNS server with more resolution times may be determined as the DNS server with the higher priority, thereby avoiding a domain name resolution failure.

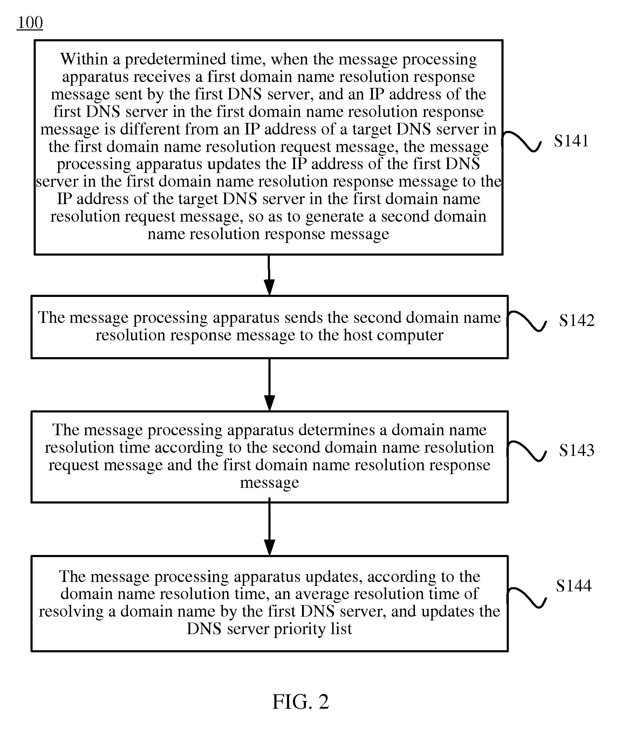

In this embodiment of the present invention, as shown in FIG. 2, after step S130, the method 100 may further include:

S141. Within a predetermined time, when the message processing apparatus receives a first domain name resolution response message sent by the first DNS server, and an IP address of the first DNS server in the first domain name resolution response message is different from an IP address of a target DNS server in the first domain name resolution request message, the message processing apparatus updates the IP address of the first DNS server in the first domain name resolution response message to the IP address of the target DNS server in the first domain name resolution request message, so as to generate a second domain name resolution response message.

S142. The message processing apparatus sends the second domain name resolution response message to the host computer.

That is, when sending the second domain name resolution request message to the first DNS server, the message processing apparatus may start a timer. If the first domain name resolution response message sent by the DNS server is received within a time predetermined by the timer, it may be determined whether the IP address of the first DNS server in the first domain name resolution response message is the same as the IP address of the target DNS server in the first domain name resolution request. When the IP address of the first DNS server in the first domain name resolution response message is different from the IP address of the target DNS server in the first domain name resolution request message, the IP address of the first DNS server in the first domain name resolution response message is updated to the IP address of the target DNS server in the first domain name resolution request message, so as to generate the second domain name resolution response message. Then, the message processing apparatus may send the second domain name resolution response message to the host computer, so that the host computer can identify the second domain name resolution response message and access a corresponding server according to an IP address corresponding to a domain name in the second domain name resolution response message.

When determining that the IP address of the first DNS server in the first domain name resolution response message is the same as the IP address of the target DNS server in the first domain name resolution request message (that is, the first DNS server is the DNS server designated by the network side for the host computer), the message processing apparatus may directly send the first domain name resolution response message to the host computer, so that the host computer can access a corresponding server according to an IP address corresponding to a domain name in the first domain name resolution response message.

In this embodiment of the present invention, before receiving the domain name resolution response message sent by the first DNS server, the message processing apparatus may also determine whether the IP address of the first DNS server is the same as the IP address of the target DNS server in the first domain name resolution request message, and record a result of the determining; and after receiving the first domain name resolution response message sent by the first DNS server, the message processing apparatus determines, according to the recorded result, whether to change the IP address of the DNS server in the first domain name resolution response message.

In this embodiment of the present invention, if the message processing apparatus receives, within the predetermined time, the first domain name resolution response message sent by the first DNS server, as shown in FIG. 2, the method 100 may further include:

S143. The message processing apparatus determines a domain name resolution time according to the second domain name resolution request message and the first domain name resolution response message.

S 144. The message processing apparatus updates, according to the domain name resolution time, an average resolution time of resolving domain names by the first DNS server, and updates the DNS server priority list.

If receiving, within the predetermined time, the domain name resolution response message sent by the first DNS server, the message processing apparatus may determine, according to a time when the second domain name resolution request message is sent and a time when the first domain name resolution response message is received, a resolution time of resolving a domain name, so that the message processing apparatus can update the average resolution time of resolving domain names by the first DNS server, and update the DNS server priority list. In this embodiment of the present invention, if the DNS server priority list is determined not only according to an average resolution time of resolving domain names by the DNS server, but also in combination with resolution times of resolving domain names by the DNS server, the message processing apparatus may further update resolution times of resolving domain names by the first DNS server and update the DNS server priority list according to the updated resolution times and the average resolution time.

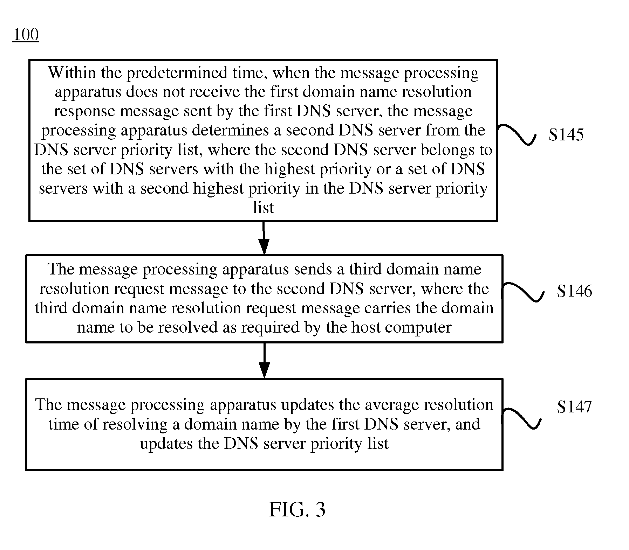

In this embodiment of the present invention, as shown in FIG. 3, after step S130, the method 100 may further include:

S145. Within the predetermined time, when the message processing apparatus does not receive the first domain name resolution response message sent by the first DNS server, the message processing apparatus determines a second DNS server from the DNS server priority list, where the second DNS server belongs to the set of DNS servers with the highest priority or a set of DNS servers with a second highest priority in the DNS server priority list.

S146. The message processing apparatus sends a third domain name resolution request message to the second DNS server, where the third domain name resolution request message carries the domain name to be resolved as required by the host computer.

If the message processing apparatus does not receive, within the predetermined time, the domain name resolution response message sent by the first DNS server, the message processing apparatus may select a new DNS server. For example, if the first DNS server is a DNS server with a highest priority, the message processing apparatus may select a DNS server with a highest priority except the first DNS server; and if the set of DNS servers with the highest priority includes a plurality of DNS servers, the message processing apparatus may select another DNS server from the set of DNS servers with the highest priority and send the domain name resolution request message to the reselected DNS server; or when the set of DNS servers with the highest priority only has the first DNS server, the message processing apparatus may select another DNS server from the set of DNS servers with the second highest priority, thereby avoiding a domain name resolution failure of the DNS server and improving user experience.

In this embodiment of the present invention, if the message processing apparatus does not receive, within the predetermined time, the first domain name resolution response message sent by the first DNS server, as shown in FIG. 3, the method 100 may further include:

S147. The message processing apparatus updates the average resolution time of resolving domain names by the first DNS server, and updates the DNS server priority list.

That is, when the message processing apparatus does not receive, within the predetermined time, the domain name resolution response message sent by the first DNS server, it may be assumed that the resolution time of the first DNS server this time is the predetermined time or N (N≥2) times the predetermined time, or it may be determined that the resolution time of resolving a domain name this time is infinite, so that the average resolution time of resolving domain names by the DNS server can be determined again, and the DNS server priority list can be updated. In this embodiment of the present invention, if the DNS server priority list is determined not only according to the average resolution time of resolving domain names by the DNS server, but also in combination with the resolution times of resolving domain names by the DNS server, the message processing apparatus may further update the resolution times of resolving domain names by the first DNS server and update the DNS server priority list according to the updated resolution times and the average resolution time.

In this embodiment of the present invention, the method 100 may further include:

The message processing apparatus receives an over the air (Over the Air, "OTA" for short) message, where the OTA message includes information about an updated DNS server.

The message processing apparatus determines, according to the OTA message, that the updated DNS server belongs to the set of DNS servers with the highest priority in the DNS server priority list.

That is, after receiving an OTA message used to indicate that a DNS server needs to be updated, such as an OTA message sent by the network side, the message processing apparatus may determine the DNS server to be updated as the set of DNS servers with the highest priority. For example, average resolution time of resolving domain names by the updated DNS server may be determined as 0. Because 0 is the shortest average resolution time, the updated DNS server may be determined as the DNS server with a highest priority; it may be determined that the updated DNS server belongs to the set of DNS servers with the highest priority; the updated DNS server may be determined as a DNS server with a highest priority in a current location area of the host computer; or it may be determined that the updated DNS server belongs to a set of DNS servers with a highest priority in the current location area of the host computer. Therefore, when the host computer enters different location areas, different DNS servers may be arranged on a network as needed.

In this embodiment of the present invention, the DNS server priority list may include at least one of a DNS server priority list in a location area where the host computer is located, a DNS server priority list of an operator of the host computer, and DNS server priority lists of all operators, where a query sequence of the DNS server priority list is successively as follows: the priority list of DNS servers in a location area where the host computer is located, the DNS server priority list of the operator of the host computer, and the DNS server priority lists of all operators.

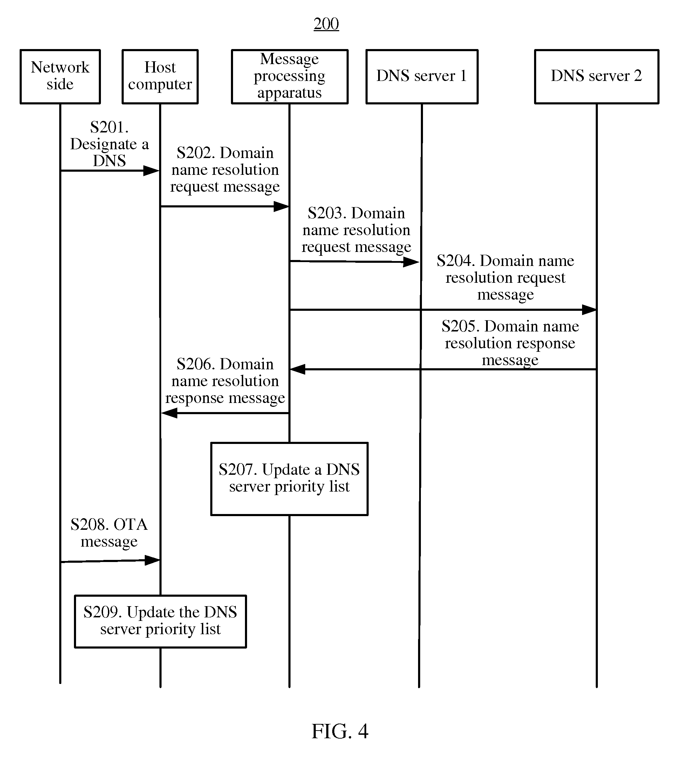

In order to further understand the present invention, a message processing method according to another embodiment of the present invention is described in detail with reference to FIG. 4 in the following.

FIG. 4 is a schematic flowchart of a message processing method 200 according to an embodiment of the present invention. As shown in FIG. 4, the method 200 includes:

S201. In a dial-up access process of a host computer, a network side designates, for the host computer, a DNS server used to resolve a domain name.

S202. The host computer needs to access a certain website, and sends a domain name resolution request message to a message processing apparatus, where the request message carries a domain name required to be resolved and an IP address of the DNS server designated by the network side.

S203. The message processing apparatus selects a DNS server with a highest priority from a DNS server priority list according to a location area where the host computer is located, such as DNS server 1; then sends the domain name resolution request message to DNS server 1, where the domain name resolution request message carries the domain name required to be resolved; and starts a timer at the time of sending the domain name resolution request message.

S204. When the message processing apparatus does not receive, within a time predetermined by the timer, a domain name resolution response message sent by DNS server 1, the message processing apparatus selects a DNS server with a highest priority other than DNS server 1 in the location area from the DNS server priority list, such as DNS server 2; then sends a domain name resolution request to DNS server 2, where the domain name resolution request message carries the domain name required to be resolved; and starts the timer at the time of sending the domain name resolution request message.

S205. When receiving the domain name resolution request message sent by the message processing apparatus, DNS server 2 may determine, according to the domain name resolution request message, an IP address corresponding to the domain name carried in the domain name resolution request message; and sends a domain name resolution response message to the message processing apparatus, where the domain name resolution response message carries an IP address corresponding to the domain name required to be resolved as required by the DNS server, and an IP address of DNS server 2.

S206. The message processing apparatus receives, within the predetermined time, the domain name resolution response message sent by the DNS server; and determines whether the IP address of DNS server 2 in the response message is the IP address of the DNS server that is designated by the network side and carried in the host computer. If the IP address of DNS server 2 in the response message is not the IP address of the DNS server that is designated by the network side and carried in the host computer, the message processing apparatus updates the IP address of DNS server 2 in the response message to the IP address of the DNS server in the domain name resolution request message sent by the host computer. The message processing apparatus sends the domain name resolution response message to the host computer, so that the host computer can access a corresponding server according to the IP address carried in the domain name resolution response message.

S207. The message processing apparatus may update, according to resolution time of the domain name this time, an average domain name resolution time and domain name resolution times of DNS server 1 and DNS server 2, and update a priority ranking of the DNS server priority list.

S208. When needing to update a DNS server in the location area where the host computer is located, the network side sends an OTA message to the message processing apparatus, where the OTA message carries information about an updated DNS server.

S209. When receiving the OTA message sent by the network side, the message processing apparatus may set the updated DNS server to the DNS server with the highest priority in the location area where the host computer is located.

It should be understood that the method 200 is just an embodiment of the present invention and shall not constitute any limitation on the present invention. For example, when the message processing apparatus does not receive the domain name resolution response message of DNS server 2 within the predetermined time, the message processing apparatus may select a new DNS server and send the domain name resolution request message to the reselected DNS server; if the message processing apparatus still does not receive a domain name resolution response message of the newly-selected DNS server within the predetermined time, the message processing apparatus may further reselect a DNS server until a domain name resolution response message sent by the DNS server is received.

It should further be understood that in various embodiments of the present invention, a value of a sequence number in the foregoing each process does not mean an execution order. The execution order of each process depends on their functions and internal logic, and shall not constitute any limitation on the implementation process of this embodiment of the present invention. For example, updating the domain name resolution time and the domain name resolution times of DNS server 1 in S207 may be performed before DNS server 2 is selected in S204. For another example, S208 and S209 may be performed before the network side allocates a DNS to the host computer in S201.

Therefore, according to the message processing method in this embodiment of the present invention, a DNS server is determined from a set of DNS servers with a highest priority in a DNS server priority list, so that a DNS server can be flexibly selected to resolve a domain name, which avoids that only a DNS server designated by a network side can be used to resolve the domain name, thereby further reducing a domain name resolution time, avoiding a domain name resolution failure, and improving user experience of Internet surfing.

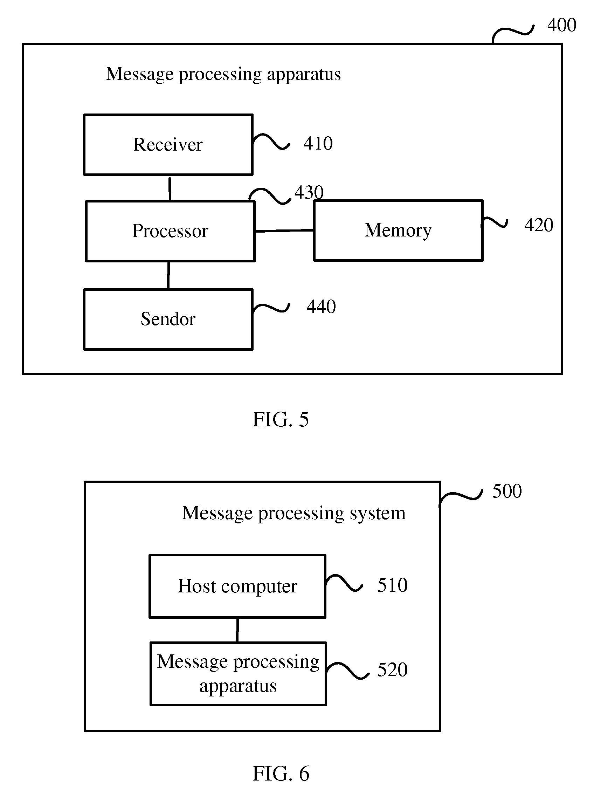

The message processing methods according to the embodiments of the present invention are described in the foregoing with reference to FIG. 1 to FIG. 4. A message processing apparatus according to an embodiment of the present invention is described in the following with reference to FIG. 5. The message processing apparatus may specifically be an integrated Internet access module, a wireless network interface card, or another apparatus or product that processes a domain name resolution message.

FIG. 5 is a schematic block diagram of a message processing apparatus according to an embodiment of the present invention. As shown in FIG. 5, an apparatus 400 includes:
a receiver 410, configured to receive a first domain name resolution request message sent by a host computer, where the first domain name resolution request message carries a domain name to be resolved as required by the host computer;
a memory 420, configured to store a DNS server priority list;
a processor 430, configured to acquire the DNS server priority list from the memory 420 according to the first domain name resolution request message received by the receiver 410, and determine a first DNS server from the DNS server priority list, where the first DNS server belongs to a set of DNS servers with a highest priority in the DNS server priority list; and further configured to generate a second domain name resolution request message according to the first domain name resolution request message and the first DNS server, where the second domain name resolution request message carries the domain name to be resolved as required by the host computer; and
a sender 440, configured to send the second domain name resolution request message generated by the processor 430 to the first DNS server.

Therefore, according to the message processing apparatus in this embodiment of the present invention, a DNS server is determined from a set of DNS servers with a highest priority in a DNS server priority list, so that a DNS server can be flexibly selected to resolve a domain name, which avoids that only a DNS server designated by a network side can be used to resolve the domain name, thereby further reducing a domain name resolution time, avoiding a domain name resolution failure, and improving user experience of Internet surfing.

Optionally, the processor 430 is further configured to determine the DNS server priority list according to an average resolution time of resolving domain names by a DNS server; and
the memory 420 is further configured to store the average resolution time of resolving domain names by the DNS server.

Optionally, the processor 430 is further configured to determine the DNS server priority list according to the average resolution time and resolution times of resolving domain names by the DNS server; and
the memory 420 is further configured to store the resolution times of resolving domain names by the DNS server.

Optionally, the receiver 410 is further configured to receive, within a predetermined time, a first domain name resolution response message sent by the first DNS server;
the processor 430 is further configured to determine whether an IP address of the first DNS server in the first domain name resolution response message is the same as an IP address of a target DNS server in the first domain name resolution request message, and when the IP address of the first DNS server in the first domain name resolution response message is different from the IP address of the target DNS server in the first domain name resolution request message, update the IP address of the first DNS server in the first domain name resolution response message to the IP address of the target DNS server in the first domain name resolution request message, so as to generate a second domain name resolution response message; and
the sender 440 is further configured to send the second domain name resolution response message generated by the processor 430 to the host computer.

Optionally, the processor 430 is further configured to:
determine a domain name resolution time according to the second domain name resolution request message and the first domain name resolution response message; and
update, according to the domain name resolution time, the average resolution time of resolving domain names by the first DNS server, and update the DNS server priority list.

Optionally, the processor 430 is further configured to determine a second DNS server from the DNS server priority list when it is determined that the receiver 410 does not receive, within the predetermined time, the first domain name resolution response message sent by the first DNS server, where the second DNS server belongs to the set of DNS servers with the highest priority or a set of DNS servers with a second highest priority in the DNS server priority list; and the processor is further configured to generate a third domain name resolution request message according to the first domain name resolution request message and the second DNS server, where the third domain name resolution request message carries the domain name to be resolved as required by the host computer; and
the sender 440 is further configured to send the third domain name resolution request message generated by the processor 430 to the second DNS server.

Optionally, the processor 430 is further configured to:
update the average resolution time of resolving domain names by the first DNS server, and update the DNS server priority list.

Optionally, the receiver 410 is further configured to receive an over the air OTA message, where the OTA message includes information about an updated DNS server; and
the processor 430 is further configured to determine, according to the OTA message received by the receiver 410, that the updated DNS server belongs to the set of DNS servers with the highest priority in the DNS server priority list.

In this embodiment of the present invention, for brevity of description, only one of each kind of hardware is described in FIG. 5, but there may be one or more of each kind of hardware in FIG. 5. For example, the processor shown in the figure may be one microprocessor or a combination of multiple processing units and a chip, and the receiver and the sender may be an integrated radio frequency component or may be formed by a plurality of radio frequency components, which is not limited in this embodiment of the present invention.

In this embodiment of the present invention, for specific component composition of the receiver, the sender, the processor, and the memory, reference may be made to the prior art, and this embodiment of the present invention sets no limitation thereto.

It should be understood that the message processing apparatus 400 according to this embodiment of the present invention may be corresponding to the message processing apparatus in the method embodiment of the present invention, and for an operation performed by each kind of hardware or through coordination of hardware and corresponding software, refer to the methods 100 to 200 in the method embodiments in FIG. 1 to FIG. 4. Details are not described herein again to avoid repetition.

Therefore, according to the message processing apparatus in this embodiment of the present invention, a DNS server is determined from a set of DNS servers with a highest priority in a DNS server priority list, so that a DNS server can be flexibly selected to resolve a domain name, which avoids that only a DNS server designated by a network side can be used to resolve the domain name, thereby further reducing a domain name resolution time, avoiding a domain name resolution failure, and improving user experience of Internet surfing.

FIG. 6 is a message processing system according to an embodiment of the present invention. As shown in FIG. 6, the system includes: a host computer 510 and a message processing apparatus 520, where the host computer 510 is configured to send a first domain name resolution request message to the message processing apparatus, and the first domain name resolution request message carries a domain name to be resolved as required by the host computer 510; and
the message processing apparatus 520 is configured to receive the first domain name resolution request message sent by the host computer 510, determine a first DNS server from a domain name system DNS server priority list according to the first domain name resolution request message, where the first DNS server belongs to a set of DNS servers with a highest priority in the DNS server priority list, and send a second domain name resolution request message to the first DNS server according to the first domain name resolution request message, where the second domain name resolution request message carries the domain name to be resolved as required by the host computer.

The message processing apparatus 520 according to this embodiment of the present invention may be corresponding to the message processing apparatus 400 in the apparatus embodiment of the present invention, and details are not described herein again for brevity.

The message processing apparatus 520 according to this embodiment of the present invention may be corresponding to a plurality of host computers 510, that is, one message processing apparatus may process domain name resolution request messages for a plurality of host computers, which may depend on a specific situation and is not limited in this embodiment of the present invention.

The message processing apparatus according to this embodiment of the present invention may be a wireless network interface card and an access point or may be a module in the host computer; and the message processing system may be a mobile phone, tablet computer, or computer that includes a wireless network access module, or may be one or more other machines having an Internet access function, which is not limited in this embodiment of the present invention.

Therefore, according to the message processing system in this embodiment of the present invention, a DNS server is determined from a set of DNS servers with a highest priority in a DNS server priority list, so that a DNS server can be flexibly selected to resolve a domain name, which avoids that only a DNS server designated by a network side can be used to resolve the domain name, thereby further reducing a domain name resolution time, avoiding a domain name resolution failure, and improving user experience of Internet surfing.

A person of ordinary skill in the art may be aware that, in combination with the examples described in the embodiments disclosed in the specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The software product is stored in a storage medium, and includes several instructions for instructing a computer device (which may be a personal computer, a server, a network device, or the like) to perform all or a part of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A message processing method, comprising:
receiving, by a message processing apparatus, a first domain name resolution request message sent by a host computer, wherein the first domain name resolution request message carries a domain name to be resolved as required by the host computer;
determining, by the message processing apparatus, a first DNS server from a domain name system DNS server priority list according to the first domain name resolution request message, wherein the first DNS server belongs to a set of DNS servers with a highest priority in the DNS server priority list; and
sending, by the message processing apparatus, a second domain name resolution request message to the first DNS server according to the first domain name resolution request message, wherein the second domain name resolution request message carries the domain name to be resolved as required by the host computer.

2. The method according to claim 1, wherein before the determining, by the message processing apparatus, a first DNS server from a domain name system DNS server priority list, the method further comprises:
determining, by the message processing apparatus, the DNS server priority list based on an average resolution time of resolving domain names by a DNS server.

3. The method according to claim 1 or 2, wherein the determining, by the message processing apparatus, the DNS server priority list based on an average resolution time of resolving domain names by a DNS server comprises:
determining, by the message processing apparatus, the DNS server priority list based on the average resolution time and resolution times of resolving domain names by the DNS server.

4. The method according to any one of claims 1 to 3, wherein after the sending, by the message processing apparatus, a second domain name resolution request message to the first DNS server, the method further comprises:
receiving, by the message processing apparatus within a predetermined time, a first domain name resolution response message sent by the first DNS server, and when an IP address of the first DNS server in the first domain name resolution response message is different from an IP address of a target DNS server in the first domain name resolution request message, updating, by the message processing apparatus, the IP address of the first DNS server in the first domain name resolution response message to the IP address of the target DNS server in the first domain name resolution request message, so as to generate a second domain name resolution response message; and
sending, by the message processing apparatus, the second domain name resolution response message to the host computer.

5. The method according to claim 4, wherein the method further comprises:
determining, by the message processing apparatus, a domain name resolution time according to the second domain name resolution request message and the first domain name resolution response message; and
updating, by the message processing apparatus according to the domain name resolution time, an average resolution time of resolving domain names by the first DNS server, and updating the DNS server priority list.

6. The method according to any one of claims 1 to 3, wherein after the sending, by the message processing apparatus, a second domain name resolution request message to the first DNS server, the method further comprises:
determining a second DNS server from the DNS server priority list when the message processing apparatus does not receive, within a predetermined time, a first domain name resolution response message sent by the first DNS server, wherein the second DNS server belongs to the set of DNS servers with a highest priority or a set of DNS servers with a second highest priority in the DNS server priority list; and
sending, by the message processing apparatus, a third domain name resolution request message to the second DNS server, wherein the third domain name resolution request message carries the domain name to be resolved as required by the host computer.

7. The method according to claim 6, wherein the method further comprises:
updating, by the message processing apparatus, average resolution time of resolving domain names by the first DNS server, and updating the DNS server priority list.

8. The method according to any one of claims 1 to 7, wherein the method further comprises:
receiving, by the message processing apparatus, an over the air OTA message, wherein the OTA message comprises information about an updated DNS server; and
determining, by the message processing apparatus according to the OTA message, that the updated DNS server belongs to the set of DNS servers with the highest priority in the DNS server priority list.

9. The method according to any one of claims 1 to 8, wherein the DNS server priority list comprises at least one of a priority list of DNS servers in a location area where the host computer is located, a DNS server priority list of an operator of the host computer, and DNS server priority lists of all operators, wherein a query sequence of the DNS server priority list is as follows: the priority list of DNS servers in a location area where the host computer is located, the DNS server priority list of an operator of the host computer, and the DNS server priority lists of all operators.

10. A message processing apparatus, comprising:
a receiver, configured to receive a first domain name resolution request message sent by a host computer, wherein the first domain name resolution request message carries a domain name to be resolved as required by the host computer;
a memory, configured to store a domain name system DNS server priority list;
a processor, configured to acquire the DNS server priority list from the memory according to the first domain name resolution request message received by the receiver, and determine a first DNS server from the DNS server priority list, wherein the first DNS server belongs to a set of DNS servers with a highest priority in the DNS server priority list; and further configured to generate a second domain name resolution request message according to the first domain name resolution request message and the first DNS server, wherein the second domain name resolution request message carries the domain name to be resolved as required by the host computer; and
a sender, configured to send the second domain name resolution request message generated by the processor to the first DNS server.

11. The apparatus according to claim 10, wherein:
the processor is further configured to determine the DNS server priority list according to an average resolution time of resolving domain names by a DNS server; and
the memory is further configured to store the average resolution time of resolving domain names by the DNS server.

12. The apparatus according to claim 10 or 11, wherein:
the processor is further configured to determine the DNS server priority list according to the average resolution time and resolution times of resolving domain names by the DNS server; and
the memory is further configured to store the resolution times of resolving domain names by the DNS server.

13. The apparatus according to any one of claims 10 to 12, wherein:
the receiver is further configured to receive, within a predetermined time, a first domain name resolution response message sent by the first DNS server;
the processor is further configured to determine whether an IP address of the first DNS server in the first domain name resolution response message is the same as an IP address of a target DNS server in the first domain name resolution request message, and when the IP address of the first DNS server in the first domain name resolution response message is different from the IP address of the target DNS server in the first domain name resolution request message, update the IP address of the first DNS server in the first domain name resolution response message to the IP address of the target DNS server in the first domain name resolution request message, so as to generate a second domain name resolution response message; and
the sender is further configured to send the second domain name resolution response message generated by the processor to the host computer.

14. The apparatus according to claim 13, wherein the processor is further configured to:
determine a domain name resolution time according to the second domain name resolution request message and the first domain name resolution response message; and
update, according to the domain name resolution time, an average resolution time of resolving domain names by the first DNS server, and update the DNS server priority list.

15. The apparatus according to any one of claims 10 to 12, wherein:
the processor is further configured to determine a second DNS server from the DNS server priority list when it is determined that the receiver does not receive, within a predetermined time, a first domain name resolution response message sent by the first DNS server, wherein the second DNS server belongs to the set of DNS servers with the highest priority or a set of DNS servers with a second highest priority in the DNS server priority list; the processor is further configured to generate a third domain name resolution request message according to the first domain name resolution request message and the second DNS server, wherein the third domain name resolution request message carries the domain name to be resolved as required by the host computer; and
the sender is further configured to send the third domain name resolution request message generated by the processor to the second DNS server.

16. The apparatus according to claim 15, wherein the processor is further configured to:
update an average resolution time of resolving domain names by the first DNS server, and update the DNS server priority list.

17. The apparatus according to any one of claims 10 to 16, wherein:
the receiver is further configured to receive an over the air OTA message, wherein the OTA message comprises information about an updated DNS server; and
the processor is further configured to determine, according to the OTA message received by the receiver, that the updated DNS server belongs to the set of DNS servers with the highest priority in the DNS server priority list.

18. The apparatus according to any one of claims 10 to 17, wherein:
the message processing apparatus comprises a wireless network card or a wireless network access module.

19. A message processing system, comprising a host computer and the message processing apparatus according to any one of claims 10 to 18, wherein the host computer is configured to send a first domain name resolution request message to the message processing apparatus, wherein the first domain name resolution request message carries a domain name to be resolved as required by the host computer; and
the message processing apparatus is configured to receive the first domain name resolution request message sent by the host computer; determine a first DNS server from a domain name system DNS server priority list according to the first domain name resolution request message, wherein the first DNS server belongs to a set of DNS servers with a highest priority in the DNS server priority list; and send a second domain name resolution request message to the first DNS server according to the first domain name resolution request message, wherein the second domain name resolution request message carries the domain name to be resolved as required by the host computer.
